# EUROPÄISCHE PATENTSCHRIFT

(11) **EP 4 058 647 B1**
(45) Veröffentlichungstag und Bekanntmachung des Hinweises auf die Patenterteilung: **15.01.2025**
(21) Anmeldenummer: 20823725.5
(22) Anmeldetag: 05.11.2020
(51) Int. Cl.: E04H 15/32, E04B 7/00, E04B 1/18, A01G 9/14, E04H 15/54, E04H 15/64, E04B 7/16

(54) **TRAGWERK ZUM TRAGEN EINER DURCH EINE FOLIE GEBILDETEN FOLIENHÜLLE SOWIE BAUWERK UMFASSEND EIN SOLCHES TRAGWERK**
SUPPORT STRUCTURE FOR SUPPORTING A FILM WRAPPING MADE OF A FILM, AND STRUCTURE COMPRISING SUCH A SUPPORT STRUCTURE
STRUCTURE PORTEUSE DESTINÉE À PORTER UNE ENVELOPPE CONSTITUÉE D'UN FILM ET CONSTRUCTION COMPRENANT UNE TELLE STRUCTURE PORTEUSE

(30) Priorität: 13.11.2019 DE 102019130650
(43) Veröffentlichungstag der Anmeldung: 21.09.2022
(73) Patentinhaber: Vector Foiltec GmbH, 28717 Bremen (DE)
(72) Erfinder: LANGNER, Thomas Christof, 28717 Bremen (DE)
(74) Vertreter: Weidner Stern Jeschke
(86) Internationale Anmeldenummer: PCT/DE2020/200097
(87) Internationale Veröffentlichungsnummer: WO 2021/093921

(56) Entgegenhaltungen:
- DE-A1- 102013 218 331
- DE-A1- 102014 016 999
- DE-A1- 2 747 913

## Beschreibung

Die Erfindung betrifft ein Tragwerk, insbesondere Sekundärtragwerk, zum Tragen einer durch eine Folie gebildeten Folienhülle mit wenigstens einem ersten Tragwerkelement und einem zweiten Tragwerkelement, welche definiert und zueinander benachbart mit einem Spalt beabstandet sind, wobei die Tragwerkelemente jeweils eine Folienaufnahme zum Befestigen der Folie aufweisen, sodass die Tragwerkelemente bei befestigter Folie mittels der Folie miteinander verbunden sind, sowie ein Bauwerk, welches ein entsprechendes Tragwerk aufweist.

ETFE(Ethylen-Tetrafluorethylen-Copolmer)-Folien werden insbesondere mit einer Stärke von 50 bis 350 µm in der Architektur vorwiegend bei Membrankonstruktionen verwendet. Die Folien werden als Überdachung von Schwimmbädern, wie dem Nationalen Schwimmzentrum Peking, und Gewächshäusern oder anderen Gebäuden, wie Tropical Island und Gondwanaland in Deutschland, Eden Project in England, dem Nationalstadion Peking (Vogelnest) und der 150 m hohen Zeltkonstruktion des Khan Shatyr in Kasachstan eingesetzt. Eine wichtige Bedeutung besitzen ETFE-Folien auch in Fussballstadien, wie der Allianz-Arena, der HDI-Arena, PGE Narodowy in Warschau oder des Olympiastadions in Kiew.

Insbesondere werden ETFE-Folien als Folienkissen verwendet. Beispielsweise in Dachkonstruktionen, aber auch bei anderen Bauteilen, werden entsprechende ETFE-Folien mittels Tragwerken gespannt oder angeordnet.

Aufgrund dessen, dass häufig großflächig diese Folienstrukturen eingesetzt werden, führen Kräfte an der Folie zu Bewegungen im Tragwerk, welche wiederum zu einer Dehnung der entsprechenden Folie führt. Diese Dehnungen treten lokal konzentriert auf und können insbesondere bei häufigem Auftreten zu Beschädigungen der Folie durch Materialermüdung führen.

Aus der DE 10 2014 016999 A1 ist ein Leichtbauelement für Gebäude gekannt, bei welchem eine Folie oder ein Gewebe von einem Profil mittels eines Noppen- oder Durchsetzfügung eingefasst ist und ein ein- oder beidseitig oder Mittig der Folie oder des Gewebes angeordnet ist, um mittels an den Stoßdämpfern angebrachten Piezoelementen eine Bewegung der Folie oder des Gewebes in nutzbare Energie umzuwandeln. Dazu wird die Folie von den Stoßdämpfern orthogonal zu einem Rand der Folie elastisch gehalten.

Die DE 27 47 913 A1 offenbart eine bogenartige Zeltkonstruktion, bei welcher in einem Tragwerk der Zeltkonstruktion Gimmielemente zum Einsatz. Das Tragwerk wird dann mittels Seilen gespannt und damit versteift.

Die DE 10 2013 218 331 A1 offenbart ein Wand- oder Deckenelement mit einem Folienkissen für eine bewegliche Gebäudestruktur. Mittels aufblasbarer Folienelemente kann die Geometrie und ein Öffnungszustand ein Dach verändert werden. Die Folienkissen sind dazu in einer Rahmenstruktur aufgehängt.

Die DE 10 2014 016 999 A1 beschreibt ein Leichtbauelement und eine Klemmvorrichtung, wobei ein Folienelement innerhalb der Klemmvorrichtung mittels Federelementen elastisch aufgenommen ist.

Die DE 27 47 913 A1 offenbart eine zeltartige Stützstruktur, bei welcher einzelne Elemente mittels versteifbarer Gelenke miteinander verbunden sind.

Aufgabe der Erfindung ist es, den Stand der Technik zu verbessern.

Gelöst wird die Aufgabe durch ein Tragwerk, insbesondere Sekundärtragwerk, zum Tragen einer durch eine Folie gebildeten Folienhülle oder durch eine Membran gebildete Membranhülle mit wenigstens einem ersten Tragwerkelement und einem zweiten Tragwerkelement, welche definiert und zueinander benachbart mit einem Spalt beabstandet sind, wobei die Tragwerkelemente jeweils eine Folienaufnahme zum Befestigen der Folie oder Membran aufweisen, sodass die Tragwerkelemente bei befestigter Folie mittels der Folie miteinander verbunden sind, wobei die Tragwerkelemente in einer zum gerichteten Führen von Tragwerksbewegungen eingerichteten Bewegungsaufnahme des Tragwerks beweglich angeordnet und mittels eines ersten Federelements gekoppelt sind, sodass bei einer Tragwerksbewegung eine Foliendehnung oder Membranbewegung über die Tragwerkelemente verteilt wird.

Hierdurch wird insbesondere die nach dem Stand lokal vorliegende Foliendehnung delokalisiert und somit über mehrere Tragwerkselemente hinweg verteilt. Dies führt zum einen dazu, dass die Folie selbst weniger Bewegung des Tragwerks kompensieren muss. Dabei können sich die Tragwerkelement insbesondere gegeneinander bewegen und damit lokale Spannungen und Dehnungen aus der Folie verteilen. Da diese Bewegung insbesondere parallel zu einer Kante oder einem Rand der Folie erfolgt, werden lokale Überdehnungen der Folie entlang des Tragwerkes vermieden und damit einem Schaden oder Riss vorgebeugt.

Folgendes Begriffliche sei erläutert:
Ein "Tragwerk" ist insbesondere die Bezeichnung für ein statisches Gesamtsystem von Traggliedern, die maßgeblich für die Standsicherheit eines Bauwerks sind. Das Tragwerk eines Gebäudes besteht beispielsweise aus Decken, Balken, Stützen, Wänden und der Gründung. Vorliegend werden jedoch auch Einzelbauteile, wie Deckenbalken und Stützenwände, als Tragwerk bezeichnet. Mithin sind Seiltragwerke, Stabwerke und Flächentragwerke mit umfasst. Durch vorliegende Erfindung kann insbesondere ein adaptives Tragwerk realisiert werden, welches physikalisch sich auf äußere Eigenschaften, wie beispielsweise Windlast und dergleichen, definiert einstellt.

Ein "Sekundärtragwerk" ist insbesondere eine Untereinheit eines eigentlichen Tragwerkes. So kann beispielsweise ein Dachtragwerk als Sekundärtragwerk ein Seiltragwerk aufweisen, welches die eigentlichen Dachelemente bildenden Bauteile, wie beispielsweise Folien, Gewebe oder Membranen, trägt.

Unter einer "Folie" wird vorliegend insbesondere ein sehr dünnes Metall-, Gewebe- und/oder Kunststoffblatt verstanden. Unter den Begriff fallen auch sämtliche Membranen und flexiblen Stoffe, welche beispielsweise gewebt und beschichtet sind. Insbesondere sind somit Kunststofffolien, welche umgangssprachlich auch Plastikfolie genannt werden, umfasst. Dabei handelt es sich meist um ein dünnes (< 1 mm) Blatt aus Kunststoff. Häufig wird dieses zunächst in Endlosbahnen gefertigt, aufgerollt und später in passende Stücke geschnitten. Die Folien für die vorliegenden Tragwerke sind häufig aus ETFE (Ethylen-Tetrafluorethylen-Copolymer) gefertigt. ETFE ist ein fluoriertes Copolymer bestehend aus den Monomeren Tetrafluorethylen und Ethylen. Es kann auch aus PTFE(Polytetrafluorethylen) bestehen, wobei ETFE gegenüber dem PTFE bezüglich der β- und γ-Strahlungen resistenter ist. Grundsätzlich können sämtliche wetterfesten Kunststoffe eingesetzt werden.

Eine "Folienhülle" kann durch die Folie einlagig gebildet sein oder es sind auch Folienkissen umfasst, bei denen insbesondere zwei, drei, vier oder mehr Folien einen Hohlraum umschließen.

Das erste und das zweite "Tragwerkelement" sind Bestandteile des Tragwerkes und dienen insbesondere der Befestigung der Folie oder entsprechend der Folienhülle. Beispielsweise kann die Folienhülle durch Klemmen mit dem jeweiligen Tragwerkselement verbunden sein. Wesentlich dabei ist, dass Kräfte, welche auf die Folienhülle wirken, über die Tragwerkselemente in das Tragwerk eingeleitet werden. Beispielsweise können Tragwerkelemente so angeordnet sein, dass diese einen Rahmen zum Spannen der Folienhülle oder entsprechend der Folie bilden. Insbesondere können die Tragwerkelemente zueinander beweglich angeordnet sein, so dass diese beispielsweise entlang des Tragwerks verschieblich gleiten können.

Ein zwischen zwei Tragwerkselementen angeordneter "Spalt" stellt einen Raum zwischen zwei Tragwerkelementen zur Verfügung, welcher aufgrund etwaiger Bewegungen der Tragwerkelemente verkleinert oder entsprechend vergrößert wird.

Die "Folienaufnahme" kann die Folie oder die Folienhülle direkt aufnehmen und beispielsweise durch Klemmen befestigen oder auch eine Aufnahme für ein separates Befestigungselement, welches insbesondere an der Kante einer Folie angeordnet ist, dienen. So kann beispielsweise wiederum dieses Befestigungselement durch Klemmen oder Schrauben mit dem jeweiligen Tragwerkelement befestigt sein.

Das die zwei Tragwerkelemente koppelnde "erste Federelement" ist insbesondere ein elastisches Element, welches die Bewegung zweier nebeneinander angeordneter Tragwerkelemente dämpft. In einer sehr einfachen Ausgestaltung kann dies beispielsweise ein Hartgummielement sein, welches in dem Spalt zwischen dem ersten Tragwerkelement und dem zweiten Tragwerkelement angeordnet ist. Durch dieses erste Federelement wird somit direkt die Dehnung verringert, welche sonst durch die Folie oder die Folienhülle kompensiert werden müsste.

Somit besteht der Kern der Erfindung insbesondere darin, dass durch das federnde koppelnde Tragwerkelement die Dehnung, welche nach dem Stand der Technik durch die Folie kompensiert oder entsprechend nachgegeben wird oder durch externe Federelemente nur orthogonal oder annähernd orthogonal zu einem Rand der Folie aufgefangen wird, durch Federelemente insbesondere in Richtung entlang der Kanten oder Ränder der Folie verringert wird. Dies erhöht die Lebensdauer der Folien erheblich.

In einer weiteren Ausführungsform weist das Tragwerk eines drittes Tragwerkelement, ein viertes Tragwerkelement, ein fünftes Tragwerkelement und/oder weitere Tragwerkelemente auf, welche jeweils mit einem Spalt zu einem benachbarten Tragwerkelement angeordnet mittels eines zweiten Federelements, eine dritten Federelements, eines vierten Federelements und/oder mittels weiterer Federelemente gekoppelt sind, sodass bei einer Tragwerksbewegung die Foliendehnung über mehrere Tragwerkelemente verteilt wird.

Durch die weiteren Tragwerkelemente und weiteren Federelemente können somit insbesondere Bewegungen des Tragwerkes über mehrere Tragwerkelemente hinweg kompensiert oder entsprechend gedämpft werden. Dies führt wiederum dazu, dass die Belastung auf die Folie oder entsprechend die Folienhülle ebenfalls verteilt wird. Die jeweiligen Tragwerkelemente wie auch die Federelemente können wie die zuvor beschriebenen Tragwerkelemente und Federelemente ausgestaltet sein.

Um Tragwerksbewegungen gerichtet mittels der Tragwerkselemente zu führen, weist das Tragwerk erfindungsgemäß eine Bewegungsaufnahme auf, insbesondere in einer Ausführungsform eine Schiene, in welcher die Tragwerkselemente beweglich angeordnet sind.

In einer weiteren Ausführungsform sind zwei oder mehr Federelemente miteinander mechanisch gekoppelt. Insbesondere durch dieses mechanische Koppeln kann die Tragwerksbewegung gleichmäßiger auf die einzelnen Tragwerkselemente verteilt werden. Um dieses Verteilen von Bewegungen noch besser und homogener aufzuteilen, können zueinander benachbart angeordnete Tragwerkelemente mittels einer Kopplungseinrichtung mechanisch verbunden sein, wobei der jeweiligen Kopplungseinrichtung jeweils das koppelnde Federelement zugeordnet ist.

Die "Kopplungseinrichtung" kann beispielsweise mit einem der Tragwerkselemente fest verbunden und jeweils bei dem anderen Tragwerkselement mit dem zugehörigen Federelement mechanisch verbunden sein.

Um das zulässige Spiel eines Tragwerkelements einzustellen, kann die Kopplungseinrichtung ein Begrenzungselement aufweisen, welches insbesondere als Langloch ausgestaltet ist. Im Fall des Langlochs dient die Kopplungseinrichtung als ein Führungselement, welches zulässige Bewegungen der Tragwerkelemente einstellt, und als Begrenzung.

In einer weiteren Ausführungsform weist das Tragwerk die Folienhülle auf, wobei die die Folienhülle bildende Folie mit den Tragwerkselementen verbunden ist.

Somit kann ein System bereitgestellt werden, welches als Bauelement, wie beispielsweise eine Dachkonstruktion, in einem Bauwerk eingesetzt werden kann.

In einem weiteren Aspekt wird die Aufgabe gelöst durch ein Bauwerk, welches ein zuvor beschriebenes Tragwerk aufweist.

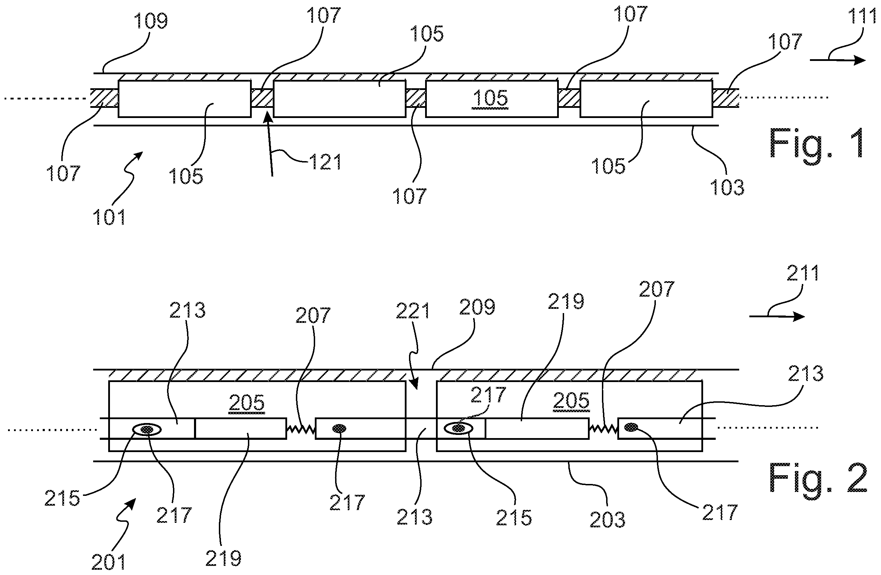

Im Weiteren wird die Erfindung anhand von Ausführungsbeispielen näher erläutert. Es zeigen
- Figur 1: eine stark schematische Seitenansicht eines Tragwerkes mit mehreren Befestigungsprofilen, welche mittels Spalten zueinander beabstandet sind, und
- Figur 2: eine stark schematische Seitenansicht eines Tragwerks mit zwei zueinander beabstandeten Befestigungsprofilen.

Ein Tragwerk 101 weist eine Vielzahl von nebeneinander angeordneten Befestigungsprofilen 105 auf, welche jeweils mit einem Spalt 121 beabstandet sind. In den jeweiligen Spalten 121 sind Gummifedern 107 angeordnet. Die Befestigungsprofile 105 sind auf einer Profilschiene 103 verschiebbar in und entgegen einer Dehnungsrichtung 111 angeordnet. Die jeweiligen Befestigungsprofile 105 befestigen klemmend eine ETFE-Folie 109. Somit tragen die Befestigungsprofile 105 die gesamte ETFE-Folie 109.

Wird nun aufgrund von Wind in das Tragwerk 101 eine Kraft in Dehnungsrichtung 111 eingeleitet, führt dies dazu, dass sich die Befestigungsprofile 105 in der Profilschiene 103 in Richtung der Dehnungsrichtung 111 bewegen. Dies führt zu einer Dehnung der ETFE-Folie 109, welche jedoch durch die Gummifedern 107 verringert wird.

Ein alternatives Tragwerk 201 weist Befestigungsprofile 205 auf. Diese Befestigungsprofile 205 sind in einer Profilschiene 203 beweglich in Dehnungsrichtung 211 gelagert. Zusätzlich sind die Befestigungsprofile 205 klemmend mit der ETFE-Folie 209 verbunden.

Eine Verbindungsstange 213 ist mit einem Befestigungsprofil 205 mittels Verbindungsbolzen 217 fest verbunden. Die Verbindung mit dem anderen Befestigungsprofil 205 ist aufgrund des Langlochs 215 und dem zugehörigen Führungsbolzen 217 beweglich gelagert. Der Verbindungsstange 213 direkt folgend ist eine Federstange 219 angeordnet, welche mit einer weiteren Verbindungsstange mit einer Spiralfeder 217 gekoppelt ist.

Wird nun eine Kraft in Dehnungsrichtung 211 in das Tragwerk 201 eingeleitet, führt dies dazu, dass die Feder 207 verlängert wird. Diese Verlängerung ist durch das Langloch 215 begrenzt und führt dazu, dass die weitere Dehnung durch die übrigen Befestigungsprofile 205 kompensiert werden muss. Somit wird durch diese Begrenzung die Trägheit der Federelemente überwunden und die Dehnungskraft in Dehnungsrichtung 2111 im Tragwerk 201 verteilt.

### Bezugszeichenliste

- 101: Tragwerk
- 103: Profilschiene
- 105: Befestigungsprofil
- 107: Gummifeder
- 109: ETFE-Folie
- 111: Dehnungsrichtung
- 121: Spalt
- 201: alternatives Tragwerk
- 203: Profilschienen
- 205: Befestigungsprofil
- 207: Spiralfeder
- 209: ETFE-Folie
- 211: Dehnungsrichtung
- 213: Verbindungsstange
- 215: Langloch
- 217: Verbindungsbolzen
- 219: Federstange
- 221: Spalt

## Patentansprüche

1. Tragwerk (101, 201), insbesondere Sekundärtragwerk, zum Tragen einer durch eine Folie (109, 209) gebildeten Folienhülle oder durch eine Membran gebildeten Membranhülle, mit wenigstens einem ersten Tragwerkelement (105, 205) und einem zweiten Tragwerkelement (105, 205), welche definiert und zueinander benachbart mit einem Spalt (121, 221) beabstandet sind, wobei die Tragwerkelemente jeweils eine Folienaufnahme zum Befestigen der Folie oder Membran aufweisen, sodass die Tragwerkelemente bei befestigter Folie oder Membran mittels der Folie oder Membran miteinander verbunden sind, **dadurch gekennzeichnet, dass** die Tragwerkelemente in einer zum gerichteten Führen von Tragwerksbewegungen eingerichteten Bewegungsaufnahme des Tragwerks beweglich angeordnet und mittels eines ersten Federelements (107, 207) gekoppelt sind, sodass bei einer Tragwerksbewegung eine Foliendehnung oder Membrandehnung über die Tragwerkelemente verteilt wird.

2. Tragwerk nach Anspruch 1, **gekennzeichnet durch** ein drittes Tragwerkelement, ein viertes Tragwerkelement, ein fünftes Tragwerkelement und/oder weitere Tragwerkelemente, welche jeweils mit einem Spalt zu einem benachbarten Tragwerkelement angeordnet und mittels eines zweiten Federelements, eines dritten Federelements, eines vierten Federelements und/oder mittels weiterer Federelemente gekoppelt sind, sodass bei einer Tragwerksbewegung die Foliendehnung oder die Membrandehnung über mehrere Tragwerkelemente verteilt wird.

3. Tragwerk nach einem der vorherigen Ansprüche, **dadurch gekennzeichnet, dass** die Tragwerkelemente in einer Schiene beweglich angeordnet sind.

4. Tragwerk nach einem der Ansprüche 2 oder 3, **dadurch gekennzeichnet, dass** zwei oder mehr Federelemente miteinander mechanisch gekoppelt sind.

5. Tragwerk nach Anspruch 4, **dadurch gekennzeichnet, dass** zueinander benachbart angeordnete Tragwerkelemente mittels einer Kopplungseinrichtung (213) mechanisch verbunden sind, wobei der Kopplungseinrichtung jeweils das koppelnde Federelement zugeordnet ist.

6. Tragwerk nach Anspruch 5, **dadurch gekennzeichnet, dass** die Kopplungseinrichtung ein Führungselement aufweist.

7. Tragwerk nach einem der Ansprüche 5 oder 6, **dadurch gekennzeichnet, dass** die Kopplungseinrichtung ein Begrenzungselement aufweist und insbesondere als Langloch ausgestaltet ist.

8. Tragwerk nach einem der vorherigen Ansprüche, **dadurch gekennzeichnet, dass** das Tragwerk eine Folienhülle oder eine Membranhülle aufweist,
wobei die die Folienhülle bildende Folie oder die Membranhülle bildende Membran mit den Tragwerkelementen verbunden ist.

9. Bauwerk, welches ein Tragwerk nach einem der vorherigen Ansprüche aufweist.

## Claims

1. Support structure (101, 201), in particular a secondary support structure, for supporting a film wrapping formed by a film (109, 209) or a membrane wrapping formed by a membrane, having at least a first support structure element (105, 205) and a second support structure element (105, 205), which are spaced apart in a defined manner and adjacent to one another with a gap (121, 221), wherein the support structure elements each have a film receptacle for fastening the film or membrane, such that the support structure elements are connected to each other by means of the film or membrane when the film or membrane is fastened, **characterised in that** the support structure elements are movably arranged in a movement receptacle of the support structure configured for the directional guidance of support structure movements and are coupled by means of a first spring element (107, 207), such that in the event of a support structure movement a film elongation or membrane elongation is distributed over the support structure elements.

2. Support structure according to claim 1, **characterised by** a third support structure element, a fourth support structure element, a fifth support structure element and/or further support structure elements, which are each arranged with a gap to an adjacent support structure element and are coupled by means of a second spring element, a third spring element, a fourth spring element and/or by means of further spring elements, such that in the event of a support structure movement the film elongation or the membrane elongation is distributed over a plurality of support structure elements.

3. Support structure according to any one of the preceding claims, **characterised in that** the support elements are movably arranged in a rail.

4. Support structure according to any one of claims 2 or 3, **characterised in that** two or more spring elements are mechanically coupled to each other.

5. Support structure according to claim 4, **characterised in that** support structure elements arranged adjacent to each other are mechanically connected by means of a coupling device (213), wherein the coupling spring element is associated with the coupling device in each case.

6. Support structure according to claim 5, **characterised in that** the coupling device has a guide element.

7. Support structure according to any one of claims 5 or 6, **characterised in that** the coupling device has a limiting element and in particular is configured as an elongated hole.

8. Support structure according to any one of the preceding claims, **characterised in that** the support structure has a film wrapping or a membrane wrapping,
wherein the film forming the film wrapping or the membrane forming the membrane wrapping is connected to the support structure elements.

9. Building structure,
having a support structure according to any one of the preceding claims.

## Revendications

1. Structure porteuse (101, 201), notamment structure porteuse secondaire, pour supporter une enveloppe en feuille formée par une feuille (109, 209) ou une enveloppe en membrane formée par une membrane, avec au moins un premier élément de structure porteuse (105, 205) et un deuxième élément de structure porteuse (105, 205), qui sont espacés de manière définie et au voisinage l'un de l'autre par un espace (121, 221), les éléments de structure porteuse présentant chacun un logement de feuille pour fixer la feuille ou la membrane, de telle sorte que lorsque la feuille ou la membrane est fixée, les éléments de structure porteuse sont reliés entre eux au moyen de la feuille ou de la membrane, **caractérisée en ce que** les éléments de structure porteuse sont agencés de manière mobile dans un logement de mouvement de la structure porteuse adapté pour guider de manière dirigée des mouvements de la structure porteuse et sont couplés au moyen d'un premier élément de ressort (107, 207), de telle sorte que, lors d'un mouvement de la structure porteuse, un allongement de la feuille ou un allongement de la membrane est réparti sur les éléments de structure porteuse.

2. Structure porteuse selon la revendication 1, **caractérisée par** un troisième élément de structure porteuse, un quatrième élément de structure porteuse, un cinquième élément de structure porteuse et/ou d'autres éléments de structure porteuse, qui sont agencés chacun avec un espace par rapport à un élément de structure porteuse voisin et sont couplés au moyen d'un deuxième élément de ressort, d'un troisième élément de ressort, d'un quatrième élément de ressort et/ou au moyen d'autres éléments de ressort, de telle sorte que, lors d'un mouvement de la structure porteuse, l'allongement de la feuille ou l'allongement de la membrane est réparti sur plusieurs éléments de structure porteuse.

3. Structure porteuse selon l'une quelconque des revendications précédentes, **caractérisée en ce que** les éléments de structure porteuse sont agencés de manière mobile dans un rail.

4. Structure porteuse selon l'une quelconque des revendications 2 ou 3, **caractérisée en ce que** deux éléments de ressort ou plus sont couplés mécaniquement entre eux.

5. Structure porteuse selon la revendication 4, **caractérisée en ce que** des éléments de structure porteuse agencés au voisinage les uns des autres sont reliés mécaniquement au moyen d'un dispositif d'accouplement (213), l'élément de ressort d'accouplement étant associé respectivement au dispositif d'accouplement.

6. Structure porteuse selon la revendication 5, **caractérisée en ce que** le dispositif d'accouplement présente un élément de guidage.

7. Structure porteuse selon l'une quelconque des revendications 5 ou 6, **caractérisée en ce que** le dispositif d'accouplement présente un élément de limitation et est notamment conçu sous forme de trou oblong.

8. Structure porteuse selon l'une quelconque des revendications précédentes, **caractérisée en ce que** la structure porteuse présente une enveloppe en feuille ou une enveloppe en membrane,
la feuille formant l'enveloppe en feuille ou la membrane formant l'enveloppe en membrane étant reliée aux éléments de structure porteuse.

9. Construction,
qui présente une structure porteuse selon l'une quelconque des revendications précédentes.
